# EUROPÄISCHE PATENTSCHRIFT

(11) **EP 0 894 545 B1**
(45) Veröffentlichungstag und Bekanntmachung des Hinweises auf die Patenterteilung: **07.04.2004**
(21) Anmeldenummer: 98250200.7
(22) Anmeldetag: 09.06.1998
(51) Int. Cl.: B21B 39/00, B65G 39/06

(54) **Bandlaufrolle**
Roller for strips
Rouleau pour bandes

(30) Priorität: 04.07.1997 DE 19729916
(43) Veröffentlichungstag der Anmeldung: 03.02.1999
(73) Patentinhaber: SMS Demag AG, 40237 Düsseldorf (DE)
(72) Erfinder: Kreft, Bernd, Ing., 47877 Willich (DE)
(74) Vertreter: Meissner, Peter E., Dipl.-Ing.

(56) Entgegenhaltungen:
- DE-A- 2 401 308
- DE-B- 1 059 348
- US-A- 1 959 095
- US-A- 3 708 844

## Beschreibung

Die Erfindung betrifft eine Bandlaufrolle zum Umlenken oder Spannen von Stahl- oder Metallbändem in Bandanlagen gemäß dem Oberbegriff des Patentanspruchs 1.

Eine derartige Bandlaufrolle ist aus der US 3,708,844 bekannt.

Femer ist es aus der DE -A- 24 01 308 bekannt zwischen den Verbindungselementen Nabe/Rollenmantel schwingungsdämpfendes Material einzusetzen.

Untersuchungen von Schäden an Gurttrommeln haben ergeben, daß bei stark beanspruchten Spann- und Antriebstrommeln neben der Errechnung der erforderlichen Wellendurchmesser und der Auswahl der Wälzlager auch die in den Blechböden der Bandlaufrolle auftretenden Beanspruchungen genau ermittelt werden müssen. Mit Blechböden oder auch Abschlußböden bezeichnet man die den Zylindermantel beidseitig abschließenden Deckel, in denen zentral die Welle oder die Wellenstümfe angeordnet sind. Üblicherweise werden die Blechböden zwischen Nabe und Innenseite des Rollenmantels eingeschweißt, wobei die Blechstärke des Blechbodens abhängig ist, von den zu übertragenden Kräften.

Insbesondere bei Bandlaufrollen in Bandanlagen und Bandbehandlungsanlagen, beispielsweise in s.g. S-Rollenständen oder bei einfachen Umlenkrollen, hat sich gezeigt, daß es mitunter zu Schadensfällen kommt, wenn sich die Blechböden der Rollen unter dem Bandzug oder Umlenkkräften verformen. Da die Verformungsrichtung mit der umlaufenden Rolle stets wechselt, werden die Schweißnähte, mit denen die Blechböden am Rollenmantel bzw. an der Nabe befestigt sind, über Maßen beansprucht; es kommt zu deren Abreißen und zum Ausfall der Bandlaufrolle. Auch durch die Verformung und Durchbiegung von Rollenmantel und Welle werden Spannungen hervorgerufen, die ebenfalls die Schweißnahtverbindungen beeinträchtigen.

Man kann das Problem dadurch lösen, daß die Blechböden entsprechend stark dimensioniert werden bzw. die Mäntel entsprechend steif ausgeführt werden, um die Durchbiegung der Bandrolle so gering wie möglich zu halten. Das aber bedeutet einen höheren Materialeinsatz, insbesondere dann, wenn Nabe und Blechböden aus dem Vollen herausgearbeitet werden. Auch werden beim Einsatz starker Blechquerschnitte für den Blechboden sehr aufwendige Schweißnähte zwischen dem Blechboden und der Nabe bzw. dem Rollenmantel erforderlich, die wiederum das Mantelblech stark beanspruchen.

Aufgabe der vorliegenden Erfindung ist es, ausgehend von den beschriebenen Problemen und Nachteilen bekannter Bandlaufrollen, die Verformung und Biegung der seitlichen Blechböden möglichst komplett zu vermeiden, um die Belastungen im Anschlußbereich zwischen dem Rollenmantel und den Rollennaben zu minimieren und darüberhinaus ein schnelles Auswechseln schadhafter Bauteile zu ermöglichen.

Gelöst wird diese Aufgabe erfindungsgemäß bei einer Bandlaufrolle zum Umlenken oder Spannen von Stahl- oder Metallbändern in Bandanlagen, bestehend aus einem im wesentlichen zylindrischen, vorzugsweise aus Stahl bestehenden rohrförmigen Rollenmantel, der über an seinen beiden Enden vorgesehene, sich quer zur Längsachse der Bandlaufrolle erstreckende Blechböden mit der Nabe verbunden ist, durch die die Welle der Bandlaufrolle geführt ist, wobei
jeder Blechboden aus zwei konzentrisch zur Längsachse der Bandlaufrolle angeordneten Teilen besteht, wobei der mit dem Rollenmantel fest verbundene erste Teil und der mit der Nabe fest verbundene zweite Teil sich überlappen und im Überlappungsbereich mit parallel zur Längsachse der Bandlaufrolle verlaufenden miteinander fluchtenden gleichmäßig auf einem konzentrischen Umfangskreis verteilten Bohrungen versehen sind, durch die Bolzen zur lösbaren Verbindung der beiden Teile gesteckt sind, dadurch, dass die mit der Nabe und dem Rollenmantel fest verbundenen Teile sich jeweils sternförmig radial erstrecken und derart dimensioniert sind, dass nach Lösen der Bolzenverbindung und Verdrehen der Teile um die Längsachse der Bandlaufrolle um eine halbe Teilung der Bohrungen die sternförmigen Erstreckungen der beiden Teile in Achsrichtung der Bandlaufrolle aneinander vorbeibewegbar sind und dass zwischen den Bolzenaußendurchmessem und den Bohrungsinnendurchmessem jeweils Buchsen aus einem schwingungsdämpfenden Werkstoff eingebracht sind.

Die vorgeschlagene Konstruktion der Bandlaufrolle ermöglicht in besonders vorteilhafter Weise den schnellen und leichten Austausch verschlissener Rollenmäntel nach Entfernen der Bolzen, durch Verdrehen von Nabe und Rollenmantel gegeneinander und axiales Abziehen des Rollenmantels. Die Wälzlager der Gehäuse können beim Wechsel des Rollenmantels an ihrem Bestimmungsort verbleiben.

Ergänzend dazu wirkt sich die Mantel-Naben-Verbindung über Bolzen und Schwingungselemente aus, wobei die Schwingungselemente die Verformungsenergie aufnehmen, die bisher in die Schweißnähte zwischen Nabe und Rollenmantel aufgenommen werden mußten.

Vorzugsweise bestehen die zwischen den Bolzenaußendurchmessem und den Bohrungsinnendurchmessem vorgesehenen Buchsen aus Gummi oder einem gummiarmierten Werkstoff. Das hat den zusätzlichen Vorteil, daß neben der Schwingungsdämpfung auch elektrische Leitverbindung zur Welle unterbrochen werden.

Die Buchsen können aus marktüblichen Gummi-Metall-Dämpfungselementen bestehen, die aus konzentrischen rohrförmigen Metallhülsen mit dazwischen einvulkanisiertem Gummi gefertigt sind.

Ein Ausführungsbeispiel der Erfindung ist in der Zeichnung dargestellt und wird nachfolgend beschrieben. Es zeigt:
- Figur 1: den Längsschnitt durch eine erfindungsgemäße Bandlaufrolle,
- Figur 2: den Querschnitt durch die Bandlaufrolle nach Figur 1 im Bereich der Blechböden,
- Figur 3: einen vergrößerten Ausschnitt und Querschnitt durch einen Bolzen zur Verbindung von Nabe und Rollenmantel,
- Figur 4: die Bandlaufrolle im Längsschnitt in Ausbaustellung, und
- Figur 5: die Bandlaufrolle im Querschnitt in Ausbaustellung.

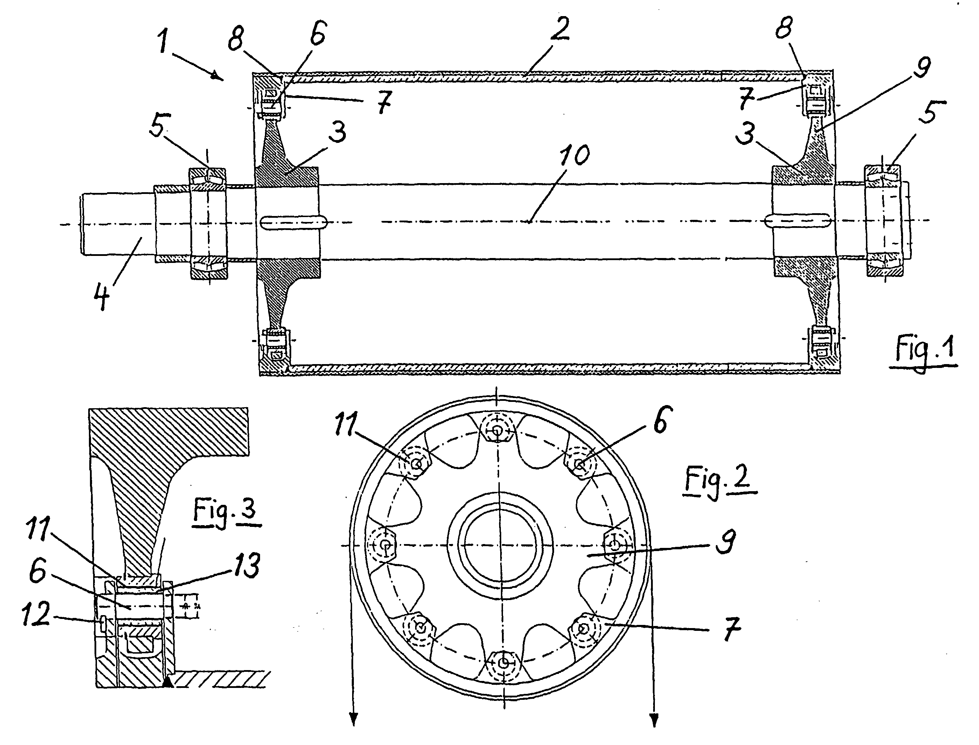

In Figur 1 ist insgesamt mit 1 die erfindungsgemäße Bandlaufrolle bezeichnet, die aus dem Rollenmantel 2, der Nabe 3, der Welle 4 mit den Lagern 5 und den Bolzen 6 besteht. Wie im Längsschnitt der Zeichnungsfigur 1 erkennbar ist, ist der Rollenmantel 2 mit einem in Figur 1 mit 7 bezeichneten Teil des zweigeteilten Blechbodens fest verbunden, d.h. das Teil 7 ist bei 8 mit der Innenseite des Rollenmantels 2 verschweißt. Mit der Nabe 3 fest verbunden ist der zweite Teil des Blechbodens, der mit 9 bezeichnet ist. Dieser Teil 9 kann mit der Nabe 3 verschweißt, oder wie in der Zeichnung des Ausführungsbeispiels, baueinheitlich mit der Nabe verbunden sein. Wie in Figur 2 im Querschnitt erkennbar, erstrecken sich die Teile 7 und 9 radial zur Längsachse 10 der Bandlaufrolle 1 sternförmig, wobei sich die Teile 7 und 9 überlappen. Im Überlappungsbereich sind die Bohrungen 11 vorgesehen, durch die die Bolzen 6 gesteckt und bei 12 gesichert sind, mit denen die Teile 7 und 9 miteinander verbunden werden.

In Figur 3 ist die Verbindung der Teile 7 und 9 vergrößert dargestellt. Erkennbar ist der Bolzen 6 in eine schwingungsdämpfende Buchse 13 eingeschoben, die ihrerseits in die Bohrung 11 eingeschoben ist. Auf diese Weise ist die Bolzenverbindung schwingungsgedämpft; die gleiche Schwingungsdämpfung ist bei allen 8 Bohrungen vorgesehen. Als Dämpfungsglied ist eine Gummimetallbuchse vorgesehen, die gleichzeitig eine elektrische Isolation zwischen Rollenmantel und Nabe herstellt.

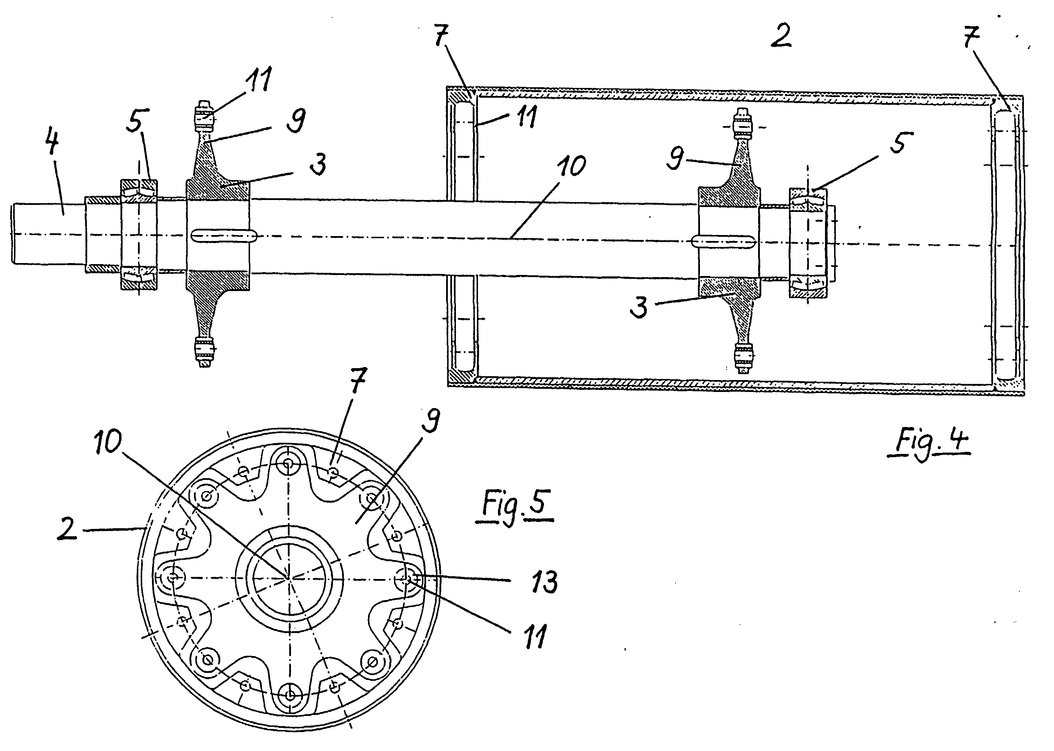

In Figur 4 ist dargestellt, wie der Rollenmantel 2 nach Lösen der Bolzen 6 von den Teilen 9 abgezogen werden kann. Am Innenumfang des Rollenmantels 2 verbleiben die dort fest verbundenen sternförmigen Teile 7, von denen die sternförmigen Teile 9 durch Verdrehen der Nabe 3 oder des Rollenmantels 2 um eine Teilung zwischen zwei Bohrungen gelöst wird. Der Rollenmantel 2 kann sodann in Richtung der Längsachse 10 abgezogen werden. Die Stellung der Teile 7 und 9 zueinander ist in Figur 5 im Querschnitt dargestellt, erkennbar behindern sich die Teile beim Ausbauen gegenseitig nicht.

Der Einbau eines neuen Rollenmantels erfolgt in umgekehrter Reihenfolge; nachdem die Teile 9 in Position gebracht sind, wird durch Verdrehen entweder des Rollenmantels 2 oder der Nabe 3 ein Fluchten der Bohrungen 11 hergestellt; die Bolzen 6 werden eingeschoben und in iherer Position bei 12 gesichert.

## Patentansprüche

1. Bandlaufrolle zum Umlenken oder Spannen von Stahl- oder Metallbändem in Bandanlagen, bestehend aus einem im wesentlichen zylindrischen, vorzugsweise aus Stahl bestehenden rohrförmigen Rollenmantel, der über an seinen beiden Enden vorgesehene, sich quer zur Längsachse der Bandlaufrolle erstreckende Blechböden mit der Nabe verbunden ist, durch die die Welle der Bandlaufrolle geführt ist, wobei
jeder Blechboden aus zwei konzentrisch zur Längsachse der Bandlaufrolle angeordneten Teilen (7,9) besteht, wobei der mit dem Rollenmantel fest verbundene erste Teil (7) und der mit der Nabe fest verbundene zweite Teil (9) sich überlappen und im Überlappungsbereich mit parallel zur Längsachse (10) der Bandlaufrolle (1) verlaufenden miteinander fluchtenden gleichmäßig auf einem konzentrischen Umfangskreis verteilten Bohrungen (11) versehen sind, durch die Bolzen (6) zur lösbaren Verbindung der beiden Teile gesteckt sind,
**dadurch gekennzeichnet,**
**dass** die mit der Nabe (3) und dem Rollenmantel (2) fest verbundenen Teile (7,9) sich jeweils sternförmig radial erstrecken und derart dimensioniert sind, dass nach Lösen der Bolzenverbindung und Verdrehen der Teile (7,9) um die Längsachse der Bandlaufrolle (1) um eine halbe Teilung der Bohrungen (11) die sternförmigen Erstreckungen der beiden Teile (7,9) in Achsrichtung der Bandlaufrolle (1) aneinander vorbeibewegbar sind und
**dass** zwischen den Bolzenaußendurchmessem und den Bohrungsinnendurchmessem jeweils Buchsen (13) aus einem schwingungsdämpfenden Werkstoff eingebracht sind.

2. Bandlaufrolle nach Anspruch 1,
**dadurch gekennzeichnet,**
**dass** die zwischen den Bolzenaußendurchmessern und den Bohrungsinnendurchmessem vorgesehenen Buchsen (13) aus Gummi oder einem gummiarmierten Werkstoff bestehen.

3. Bandlaufrolle nach Anspruch 1 und 2,
**dadurch gekennzeichnet,**
**dass** die Buchsen (13) aus marktüblichen Gummi-Metall-Dämpfungselementen bestehen.

## Claims

1. A strip roller for deflecting or tensioning steel or metal strips in strip plants, consisting of a substantially cylindrical tubular roller shell preferably made of steel which is connected to the hub through which the shaft of the strip roller passes via sheet metal plates provided at both its ends which extend transversely to the longitudinal axis of the strip roller, wherein
each sheet metal plate consists of two parts (7, 9) arranged concentrically to the longitudinal axis of the strip roller, the first part (7), which is connected securely to the roller shell, and the second part (9), which is connected securely to the hub, overlapping and being provided in the overlap region with bores (11) which are flush with one another, are distributed uniformly over a concentric peripheral circle and extend parallel to the longitudinal axis (10) of the strip roller (1), through which bores bolts (6) for detachably connecting the two parts are inserted,
**characterised in that**
the parts (7, 9) securely connected to the hub (3) and the roller shell (2) each extend radially in a star shape and are of dimensions such that once the bolt connection has been released and the parts (7, 9) turned about the longitudinal axis of the strip roller (1) by half a pitch of the bores (11) the star-shaped extensions of the two parts (7, 9) can be moved past one another in the axial direction of the strip roller (1) and that bushings (13) of a vibration-damping material are inserted in each case between the external diameters of the bolts and the internal diameters of the bores.

2. A strip roller according to Claim 1, **characterised in that** the bushings (13) provided between the external diameters of the bolts and the internal diameters of the bores are made of rubber or a rubber-reinforced material.

3. A strip roller according to Claims 1 and 2, **characterised in that** the bushings (13) consist of commercially available rubber/metal damping elements.

## Revendications

1. Galet de roulement pour tendre ou changer la direction de bandes d'acier ou de bandes métalliques dans des installations à bandes, comportant une enveloppe tubulaire de forme essentiellement cylindrique, de préférence réalisée en acier, qui est reliée au moyeu par des corps de tôle prévus à ses deux extrémités et disposés transversalement à l'axe longitudinal dudit galet, l'arbre du galet étant guidé par lesdits corps, chaque corps de tôle comportant deux parties (7, 9) disposées concentriquement à l'axe longitudinal du galet, la première partie (7) solidarisée de ladite enveloppe du galet et la seconde partie (9) solidarisée du moyeu se chevauchant alors que dans la région de chevauchement sont prévus des perçages périphériques (11) alignés les uns avec les autres parallèlement à l'axe longitudinal (10) du galet (1) et uniformément et concentriquement répartis, les deux parties étant liées de façon amovible par des boulons (6),
**caractérisé en ce que** les parties (7, 9) solidarisées du moyeu (3) et de l'enveloppe (2) ont chacune une forme d'étoile disposée radialement et sont dimensionnées de façon que, après élimination de la liaison par boulons et rotation des parties (7, 9) autour de l'axe longitudinal du galet d'un demi pas des perçages (11), les saillies en forme d'étoile des deux parties (7, 9) peuvent être déplacées l'une par rapport à l'autre dans la direction axiale du galet (1) et **en ce que** des douilles (13), en une matière amortissant les oscillations, sont à chaque fois disposées entre les diamètres extérieurs des boulons et le diamètre intérieur des perçages.

2. Galet de roulement selon la revendication 1,
**caractérisé en ce que** les douilles (13) prévues entre les diamètres extérieurs des boulons et les diamètres intérieurs des perçages sont en caoutchouc ou en caoutchouc armé.

3. Galet de roulement selon les revendications 1 et 2,
**caractérisé en ce que** les douilles (13) sont des éléments d'amortissement caoutchouc - métal usuels du marché.
